# EUROPEAN PATENT SPECIFICATION

(11) **EP 2 684 000 B1**
(45) Date of publication and mention of the grant of the patent: **29.04.2015**
(21) Application number: 12706284.2
(22) Date of filing: 02.03.2012
(51) Int. Cl.: F28D 7/00, F28D 9/00, F28F 9/00, B01D 53/26

(54) **A MODULAR HEAT EXCHANGE APPARATUS FOR COMPRESSED GASES**
MODULARER WÄRMETAUSCHER FÜR VERDICHTETE GASE
ÉCHANGEUR DE CHALEUR MODULAIRE POUR GAZ COMPRIMÉS

(30) Priority: 09.03.2011 IT PD20110076
(43) Date of publication of application: 15.01.2014
(73) Proprietor: M.T.A. S.p.A., 35026 Conselve PD (IT)
(72) Inventor: BERNARDINELLO, Stefano, I-35021 Villatora di Saonara (PD) (IT); BOTTAZZO, Andrea, I-35020 Ponte San Nicolò (PD) (IT)
(74) Representative: Locas, Davide
(86) International application number: PCT/EP2012/053675
(87) International publication number: WO 2012/119960

(56) References cited:
- WO-A1-95/03103
- US-A- 4 235 081
- US-A1- 2005 066 668
- US-B1- 6 206 971

## Description

The subject of the present invention is a unit for the heat treatment of a process fluid, in particular compressed gases, of the type including the features mentioned in the preamble of the main claim. US 2005/066668 A1 discloses such a unit. In the field of technical installations for the treatment of compressed gases it is known to use units comprising one or more heat exchangers. An example of a unit of this type is a dryer in which the process fluid is moist compressed air to be separated by condensation into dry air and water vapour.

In this type of installation, there is normally present an air/air type exchanger, an evaporator and a condensate separator, which form a path for the gas to be treated, along which it is cooled and dried.

The aforesaid units are normally formed by arranging a casing provided with the inlets and outlets for the process and operating fluids and in which are housed the aforesaid components which are fixed, normally by means of welding, in specific positions on the casing so as to define the path along which the gas is treated.

The dimensions and the arrangement of the components are determined each time on the basis of the project specifications, in particular the rates of flow and the capacities required and the use for which the unit is intended.

It is therefore evident that the different configurations of the unit necessarily require a complete redesign also of the individual components, these having to be adapted to the specific project requirements.

The need to provide specific components depending on the project requirements prevents the producers of dryers from responding promptly to the various demands, unless they keep in stock a complete range of components, with consequent logistical difficulties.

It is therefore evident that, in general, this problem, together with the need to carry out specific planning for each configuration of the unit, involves production which is often excessively complex and not very efficient either from the cost point of view or from that of the production times.

Therefore there remains in this field a need to provide treatment units for process fluids comprising elements having technical and structural features such as to make standard, modular embodiments possible, so as to make available a range of configurations that can be assembled in a relatively practical and rapid manner, without having to carry out detailed planning each time.

Therefore, the technical problem underlying the present invention is that of providing a heat exchange apparatus also referred to as unit for gases which makes it possible to remedy the disadvantages mentioned above with reference to the prior art. This problem is solved by the modular heat exchange apparatus for gases according to claim 1.

The present invention has some significant advantages. The main advantage lies in the fact that the apparatus according to the present invention can be adapted to the different planning requirements in an economical and simple manner.

In addition, the apparatus according to the present invention can be produced from a series of common components, therefore requiring fewer components in stock and, consequently, can be produced more efficiently from the logistical point of view, besides the production times and the costs.

Other advantages, features and the methods of use of the present invention will become clear from the following detailed description of some forms of embodiment, provided by way of non-limiting example. Reference will be made to the figures of the appended drawings, in which:
Figures 1 to 4 are schematic illustrations which show respectively a heat exchanger, an evaporator, a condensate separator, and a union element, details of a heat exchange apparatus according to the present invention;
Figures 5 to 9 are schematic illustrations of different configurations of the heat exchange apparatus according to the present invention; Figure 10 is an exploded plan view of a heat exchange apparatus according to the present invention;
Figure 11 is a perspective view of connecting means of the apparatus according to the present invention; and
Figures 12A and 12B are respectively a plan view and a front view of the apparatus of Figure 10.

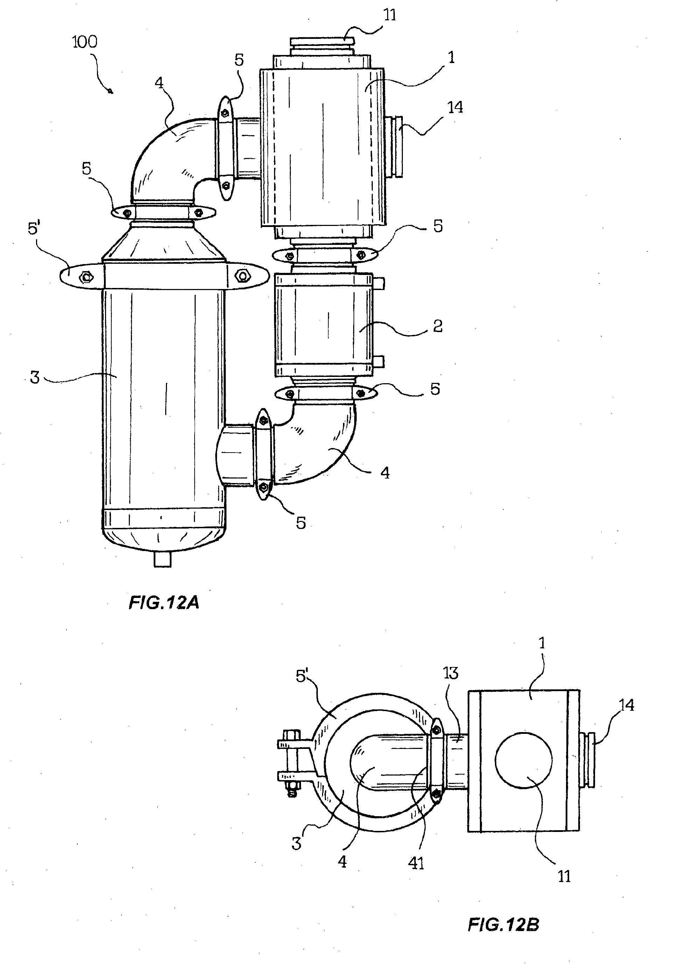

With initial reference to Figure 12A, a treatment unit for a process fluid is indicated as a whole by the number 100. The unit 100 comprises a plurality of fluid treatment devices, provided independently of one another, according to features which will be described more fully hereinafter.

In more detail, the unit 100, for the purpose of drying a compressed gas, comprises a first heat exchanger 1 of the air/air type, an evaporator 2, where the gas exchanges heat with a secondary heat exchange fluid, and a condensate separator 3. It is clear that, according to need, further fluid treatment devices may also be present, for example a further exchanger combined with the evaporator.

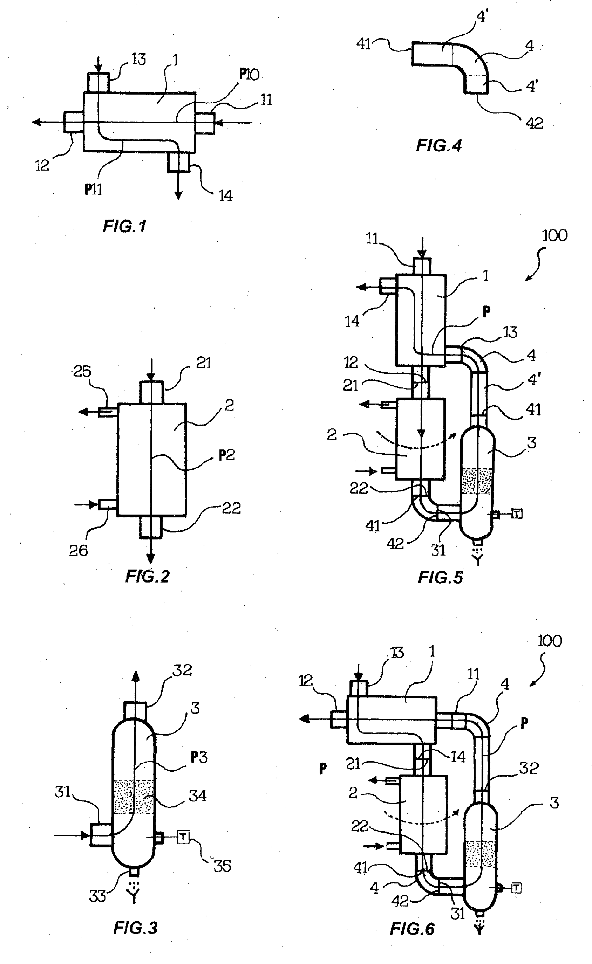

The treatment devices comprise a housing, within which the respective heat exchange or fluid treatment element is housed. In the drawings the devices 1, 2 and 3 are identified by means of their respective housing, the element housed inside them not being shown for the sake of simplicity of description. The housings therefore comprise respective portions of restricted cross-section for the inlet/outlet of the process fluid. More precisely, the air/air exchanger 1 comprises a first and a second inlet portion 11, 13 for the process fluid and a first and a second outlet portion 12, 14 for the process fluid. These portions are disposed in such a way that a first flow of gas in the exchanger 1, defined by the work section P10 thereof between the inlet portion 11 and the outlet portion 12, is traversed by a second flow of gas, defined by the work section P11 between the inlet portion 13 and the outlet portion 14, with which it exchanges heat within the exchanger 1. This configuration is illustrated schematically in Figure 1.

With reference instead to Figure 2, the evaporator 2 also comprises inlet 21 and outlet 22 portions for the gas to be treated, which define a second work section P2 for the gas, along which it is cooled by means of an auxiliary heat exchange fluid. To this end, the evaporator 2 comprises a respective inlet 25 and outlet 26 for the auxiliary heat exchange fluid.

The condensate separator 3, illustrated in Figure 3, itself comprises an inlet portion 31 and an outlet portion 32, so as to define a work section P3 along which the gas is separated from its moist component, principally by mechanical means, which are well known to a person skilled in the art. The moist component thus separated is then directed, by gravity, towards a discharge 33 by means of which it is discharged from the separator. The separator may be arranged to house intermediate filtration systems 34 and temperature sensors 35.

Finally, as illustrated in Figure 4, the apparatus according to the present invention also comprises at least one union element 4, which is also provided with inlet and outlet portions 41, 42. The union element 4 has an elbow shape, so as to deflect the flow of gas through 90°. In addition, it may be associated with straight sections 4', these also being provided, if necessary, with the aforesaid inlet and outlet cross-sections 41, 42.

With reference then to Figure 5, a schematic illustration is given of a first exemplary embodiment of the apparatus according to the present invention, in which the aforesaid components are disposed and connected in such a way as to form an overall path P for the fluid to be treated.

In particular, the apparatus 100 forms a dryer along which the moisture content in a flow of moist compressed air is reduced. The gas is admitted via the inlet 11 of the first exchanger 1, where it exchanges heat with dried air in the dryer itself, before leaving the latter, as illustrated above.

The first exchanger 1 is connected to the second exchanger 2 by coupling the outlet 12 and the inlet 21. In the latter the air is cooled further, so as to lower the temperature to the condensation point.

The second exchanger 2 is connected by means of a union element 4 into the separator 3, which then separates and removes the water from the gas. Finally, from the outlet portion 32 of the separator 3, the gas is once more sent, via a further union element 4, to the second inlet 13 of the first exchanger 1, where the heat exchange with the incoming moist air takes place, in order then to leave the apparatus 100, at the second outlet portion 14.

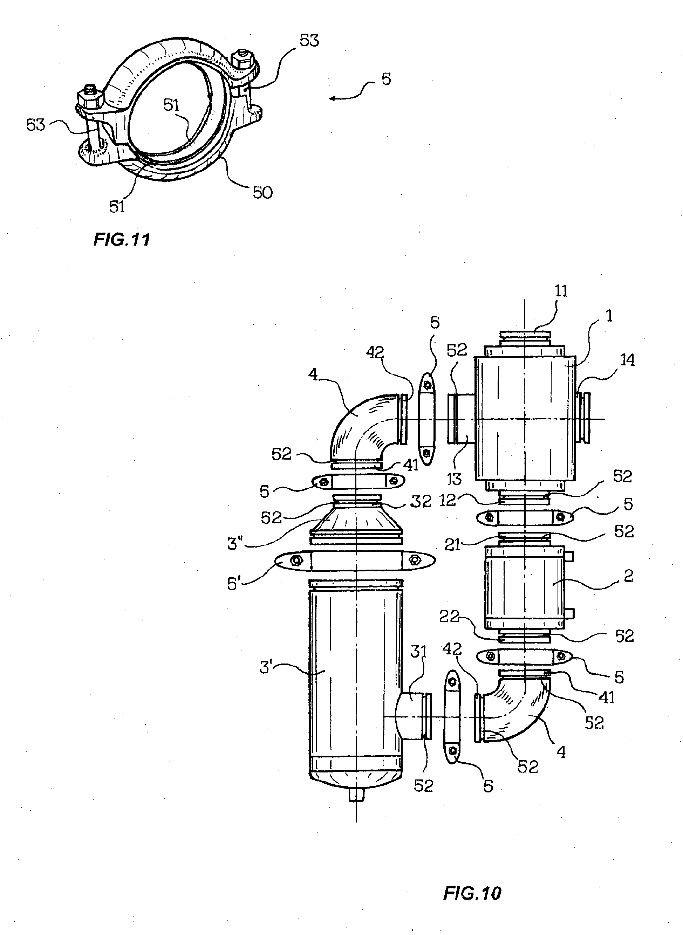

With reference then to Figures 10, 11 and 12, the connection between two devices or between one device and a union element 4 is provided by means of a connecting element 5 which, in the present form of embodiment, is of mechanical type.

More precisely, the connection may for example be provided by a Victaulic^{(R)} coupling, or a coupling formed by two half-couplings, closable by means of clamping means 53. The coupling comprises two opposed seats 51, in which can be received respective shaped ends of the elements which are to be connected. The tightening of the clamping means, for example effected by means of bolts 53, makes it possible to grip the two half-couplings in such a way as to lock the shaped ends in the respective seats 51.

The shaped ends are defined in respective connecting ends 52, provided in each of the inlet/outlet portions of the treatment devices identified above and of the union elements 4. More precisely, the ends 52 are shaped in such a way as to have a raised edge which is housed in the seat 51 and then locked therein by means of the tightening of the coupling 5. More precisely, the clamping means 53, depending on the clamping force with which the bolts are tightened, allow alternatively the receiving of the connecting ends 52 inside the seats 51 of the connecting elements 5, the rotation of the ends 52 in the seats 51 and the sealed connection of the connecting ends 52 of two respective devices or of one device and of a union element 4 which are connected by means of the connecting element 5. To this end, the connecting element comprises a sealing element housed within the seat 51.

According to a preferred form of embodiment, the inlet and outlet portions of the treatment devices and of the union elements are all of the same dimension and shape, in particular with a circular cross-section. In this way, a single type of connecting element 5 may be used for the connection of the devices to one another or of one device to a union element 4. As can be seen from

Figures 10 to 12, the inlet/outlet portions 11, 12, 13, 14, 21, 22, 31, 32 of the treatment devices 1, 2, 3 have restricted cross-sections compared with the operating cross-section of the device, understood as that cross-section of the housing. This feature makes it possible to render the devices structurally independent and therefore to be able to manage and use them, both in the installation stage and in the maintenance stage, each independently of the other.

Moreover, the use of a circular cross-section also makes it possible to orientate the union elements in any direction in space with respect to the device to which it is connected, therefore permitting different configurations of the apparatus 100, some of which will be illustrated hereinafter. Still owing to the capacity for orientation permitted by the connecting elements 5, the inlet and outlet 25 and 26 for the auxiliary heat exchange fluid can be oriented in space, as illustrated by the dashed arrow in the drawings.

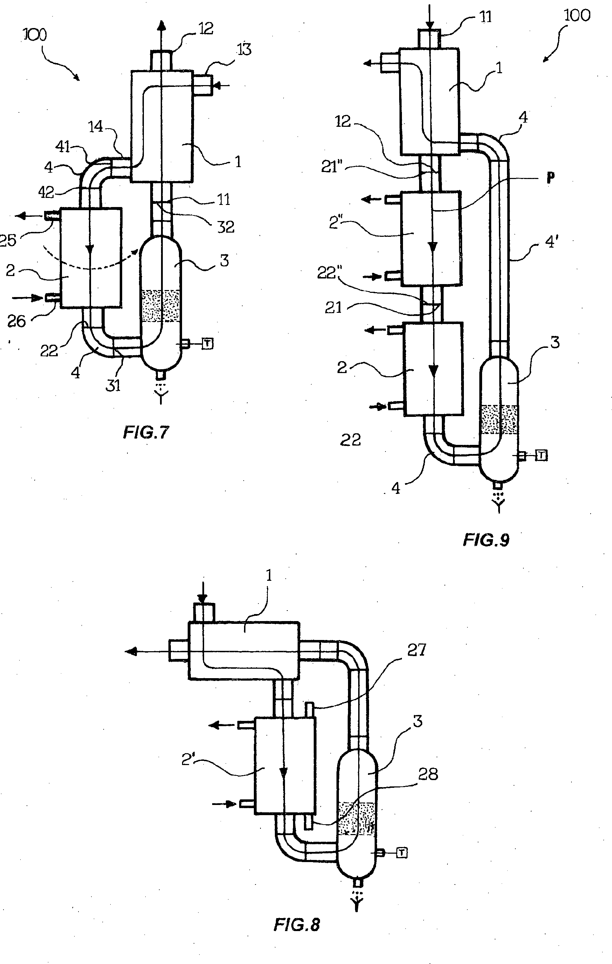

As may be seen from Figures 6 and 7, the same devices 1, 2 and 3 can be arranged differently with respect to the first form of embodiment, in such a way as to obtain a specific configuration of the apparatus 100 and spatial extension thereof. Consequently, the inlet/outlet portions of the devices 100 may be connected to one another in a manner differing from that described previously. For example, in the exemplary embodiment of Figure 6, the gas is admitted into the device via the portion 13, the first and the second exchanger are respectively connected by means of the portions 14 and 21, and the dry gas emerges from the apparatus 100 via the portion 12. Another different configuration is described in Figure 7, in which, in particular, the first and the second exchanger are connected via a union element 4 which deflects the flow through 90°.

With reference then to Figure 8, the evaporator may be substituted by an exchanger 2' which connects the evaporator and a heat exchanger in which a heat exchange with a further secondary fluid takes place, fed via suitable inlets/outlets 27, 28, which functions as a thermal mass.

It is also possible to use more than one exchanger in series or in parallel in such a way as to have exchange systems with other energy sources. Purely by way of example, in Figure 9 an apparatus 100 is shown which consists of one air/air exchanger 1, an evaporator 2 and an intermediate exchanger 2" in which flows cold water coming from energy recovery systems located outside the building in which the installation is installed. In this way, when the external atmospheric conditions permit, the machine avoids using the cooling cycle for the operations of dehumidification of the compressed gas to be treated.

The use of several exchangers arranged in series or in parallel makes it advantageously possible in addition to take advantage of exchangers of small dimensions even for effecting high heat exchanges. This makes it possible to avoid constructional difficulties and the need for periodic tests and checks required for units of large dimensions.

Finally, with reference to Figure 10, it is to be noted that the same connecting system may be used in the separator 3, the housing of which may be advantageously divided into an upper portion 3' and a lower portion 3", joined together by means of a connecting element 5', again of the Victaulic (R) type. This feature makes it possible to inspect, substitute or make improvements to the separation device.

The invention thus solves the problem proposed, at the same time obtaining a number of advantages, including increased modularity and flexibility in the configuration of the apparatus, it being possible to use a series of standard components for providing a number of different configurations of the apparatus.

The apparatus according to the present invention may in addition be made up shortly before the assembly of the machine in which it is to be installed, according to the specific requirements of the client.

In addition, the possibility of arranging in space, as desired, the various components of which it is composed, permits the orientation of the inlet and outlet portions for the gas to be treated and for the cooling fluids.

A further advantage of the present invention is linked to the fact of being able to use, with a series of common base units, even different technologies for heat exchange and regulation, such as for example with hot gas or thermal mass.

## Claims

1. A unit (100) for the heat treatment of a process fluid comprising:
* a plurality of devices for treatment of the process fluid which include at least a first heat exchanger (1), a second heat exchanger (2) and a condensate separator (3),
* at least one union element (4) between two devices of the plurality, the union element (4) having connecting ends (52) respectively in the region of an inlet portion (41) and of an outlet portion (42);
* connecting elements (5) for connecting the process fluid treatment devices (1, 2, 3) and the at least one union element (4);
**characterized in that** each of the treatment devices (1, 2,3) comprises a respective housing, in such a way as to render them structurally independent, and has connecting ends (52) in the region of respective portions of restricted cross-section (11, 12, 13, 14, 21, 22, 31, 32) for the inlet and/or outlet of the process fluid, the connecting ends (52) of two treatment devices (1, 2, 3) or of one treatment device (1, 2, 3) and of one union element (4) being connected to one another by means of the connecting elements (5), in such a way as to form a treatment path (P) which passes through the devices (1, 2, 3).

2. A unit (100) according to claim 1, wherein the connecting ends (52) have a circular cross-section with a surface area which is less than an operating cross-section of the devices (1, 2, 3).

3. A unit (100) according to claim 1 or 2, wherein the connecting elements (5) are of mechanical type and comprise two seats (51) suitable for receiving connecting ends (52) of two respective devices (1, 2, 3) or of one device (1, 2, 3) and a union element (4).

4. A unit according to claim 3, wherein the connecting elements (5) have clamping means (53) capable of permitting, depending on a clamping force of said means (53), alternatively the receiving of the connecting ends (52) in the connecting elements (5), the rotation of the ends (52) in the seats (51) and the sealed connection of the connecting ends (52) of two respective devices (1, 2, 3) or of one device (1, 2, 3) and a union element (4) which are connected by means of the connecting element (5).

5. A unit (100) according to any one of the preceding claims, wherein the connecting elements (5) are of the reversible type, in such a way as to permit the locking and the subsequent removal of the devices (1, 2, 3) and/or of the union element (4).

6. A unit (100) according to any one of the preceding claims, wherein the union element (4) has an elbow shape.

7. A unit (100) according to claim 6, further comprising a straight union portion (4').

## Patentansprüche

1. Einheit (100) zur Wärmebehandlung einer Prozessflüssigkeit, umfassend:
• eine Vielzahl von Vorrichtungen zur Behandlung der Prozessflüssigkeit, die zumindest einen ersten Wärmetauscher (1), einen zweiten Wärmetauscher (2) und einen Kondensat-Abscheider (3) umfasst,
• zumindest ein Übergangselement (4) zwischen zwei Vorrichtungen aus der Vielzahl, wobei das Übergangselement (4) Verbindungsenden (52) jeweils in der Region eines Einlassbereichs (41) und eines Auslassbereichs (42) aufweist,
• Verbindungselemente (5) zum Verbinden der Prozessflüssigkeit-Wärmebehandlungsvorrichtungen (1, 2, 3) und des zumindest einen Übergangselements (4);
**dadurch gekennzeichnet, dass** jede der Behandlungsvorrichtungen (1, 2. 3) ein entsprechendes Gehäuse aufweist, um diese dadurch strukturell unabhängig zu machen, und Verbindungsenden (52) in der Region von jeweiligen Bereichen eines beschränkten Querschnitts (11, 12, 13, 14, 21, 22, 31, 32) für den Einlass und/oder Auslass der Prozessflüssigkeit aufweist, wobei die Verbindungsenden (52) der zwei Behandlungsvorrichtungen (1, 2, 3) oder der einen Behandlungsvorrichtung (1, 2, 3) und des einen Übergangselements (4) miteinander mittels der Verbindungselemente (5) verbunden sind, um dadurch einen Behandlungsweg (P) zu bilden, der durch die Vorrichtungen (1, 2, 3) verläuft.

2. Einheit (100) nach Anspruch 1, wobei die Verbindungsenden (52) einen kreisförmigen Querschnitt mit einem Flächeninhalt aufweisen, der geringer als ein Betriebsquerschnitt der Vorrichtungen (1, 2, 3) ist.

3. Einheit (100) nach Anspruch 1 oder 2, wobei die Verbindungselemente (5) die eines mechanischen Typs sind und zwei Sitze (51) aufweisen, die zum Aufnehmen der Verbindungsenden (52) der beiden jeweiligen Vorrichtungen (1, 2, 3) oder der einen Vorrichtung (1, 2, 3) und eines Übergangselements (4) geeignet sind.

4. Einheit nach Anspruch 3, wobei die Verbindungselemente (5) Klemmeinrichtungen (53) aufweisen, die in Abhängigkeit von einer Klemmkraft der Einrichtungen (53) das alternative Aufnehmen der Verbindungsenden (52) in den Verbindungselementen (5), die Drehung der Enden (52) in den Sitzen (51) und die abgedichtete Verbindung der Verbindungsenden (52) der beiden jeweiligen Vorrichtungen (1, 2, 3) oder der einen Vorrichtung (1, 2, 3) und eines Übergangselements (4) ermöglichen, die mittels des Verbindungselements (5) verbunden sind.

5. Einheit (100) nach einem der vorhergehenden Ansprüche, wobei die Verbindungselemente (5) die eines reversiblen Typs sind, die dadurch das Verriegeln und das anschließende Entfernen der Vorrichtungen (1, 2, 3) und/oder des Übergangselements (4) zu ermöglichen.

6. Einheit (100) nach einem der vorhergehenden Ansprüche, wobei das Übergangselement (4) eine Ellbogenform aufweist.

7. Einheit (100) nach Anspruch 6, die ferner einen geraden Übergangsbereich (4') aufweist.

## Revendications

1. Unité (100) pour le traitement thermique d'un fluide de traitement comprenant :
* une pluralité de dispositifs pour le traitement du fluide de traitement qui comprennent au moins un premier échangeur de chaleur (1), un second échangeur de chaleur (2) et un séparateur de condensat (3),
* au moins un élément de raccord (4) entre deux dispositifs de la pluralité, l'élément de raccord (4) ayant des extrémités de raccordement (52) respectivement dans la région d'une partie d'entrée (41) et d'une partie de sortie (42) ;
* des éléments de raccordement (5) pour raccorder les dispositifs de traitement de fluide de traitement (1, 2, 3) et le au moins un élément de raccord (4) ;
**caractérisée en ce que** chacun des dispositifs de traitement (1, 2, 3) comprend un boîtier respectif, afin de les rendre structurellement indépendants, et a des extrémités de raccordement (52) dans la région des parties respectives de section transversale limitée (11, 12, 13, 14, 21, 22, 31, 32) pour l'entrée et/ou la sortie du fluide de traitement, les extrémités de raccordement (52) des deux dispositifs de traitement (1, 2, 3) ou du dispositif de traitement (1, 2, 3) et de l'élément de raccord (4) étant raccordées entre elles au moyen des éléments de raccordement (5) afin de former une trajectoire de traitement (P) qui passe par les dispositifs (1, 2, 3).

2. Unité (100) selon la revendication 1, dans laquelle les extrémités de raccordement (52) ont une section transversale circulaire avec une surface qui est inférieure à une section transversale de commande des dispositifs (1, 2, 3) .

3. Unité (100) selon la revendication 1 ou 2, dans laquelle les éléments de raccordement (5) sont du type mécanique et comprennent deux sièges (51) appropriés pour recevoir des extrémités de raccordement (52) de deux dispositifs (1, 2, 3) respectifs ou d'un dispositif (1, 2, 3) et un élément de raccord (4).

4. Unité selon la revendication 3, dans laquelle les éléments de raccordement (5) ont des moyens de serrage (53) capables de permettre, en fonction d'une force de serrage desdits moyens (53), de manière alternée, la réception des extrémités de raccordement (52) dans les éléments de raccordement (5), la rotation des extrémités (52) dans les sièges (51) et le raccordement scellé des extrémités de raccordement (52) de deux dispositifs (1, 2, 3) respectifs ou d'un dispositif (1, 2, 3) et un élément de raccord (4) qui sont raccordés au moyen de l'élément de raccordement (5).

5. Unité (100) selon l'une quelconque des revendications précédentes, dans laquelle les éléments de raccordement (5) sont du type réversible, afin de permettre le verrouillage et le retrait consécutif des dispositifs (1, 2, 3) et/ou de l'élément de raccord (4).

6. Unité (100) selon l'une quelconque des revendications précédentes, dans laquelle l'élément de raccord (4) a une forme de coude.

7. Unité (100) selon la revendication 6, comprenant en outre une partie de raccord droite (4').
